# EUROPEAN PATENT APPLICATION

(11) **EP 1 477 835 A1**
(43) Date of publication of application: **17.11.2004**
(21) Application number: 04252701.0
(22) Date of filing: 10.05.2004
(51) Int. Cl.: G02B 6/42

(54) **Optical module comprising a substrate having an adhesive guiding groove and a fibre fixing groove**

(30) Priority: 15.05.2003 KR 2003030899
(71) Applicant: Samsung Electronics Co., Ltd., Suwon-city, Gyeonggi-do (KR)
(72) Inventor: Lee, Jong-sig, Anyang-si Gyeonggi-do (KR); Mun, Gi-tae, Yeongtong-gu Suwon-si Gyeonggi-do (KR)
(74) Representative: Greene, Simon Kenneth

(57) **Abstract**

Provided is an optical module. The optical module includes an optical element, an optical fiber connected to the optical element, a substrate on which the optical element and the optical fiber are mounted, and a guide groove formed adjacent to an edge of the substrate, perpendicular to the fixing groove and adapted to guide an adhesive for fixing the optical fiber to the fixing groove. The substrate has a fixing groove in which the optical fiber is seated. The optical module can improve optical fiber-fixing reliability, productivity, and the performance of optical communication.

## Description

The present invention relates to an optical module, and more particularly, to an optical module which can stably fix an optical fiber.

Optical modules which convert electric signals into optical signals for optical transmission and optical modules which convert optical signals into electric signals for optical reception are essential for optical communication. In addition, a very complex technology is required to attach a variety of optical elements for generating, detecting, modulating and distributing light to optical fibers and to mount the optical fibers on a substrate. Thus, various approaches have been made to fix the optical fibers.

FIG. 1 is a perspective view of a conventional optical module disclosed in U.S. Patent No. 6,300,151 B1.

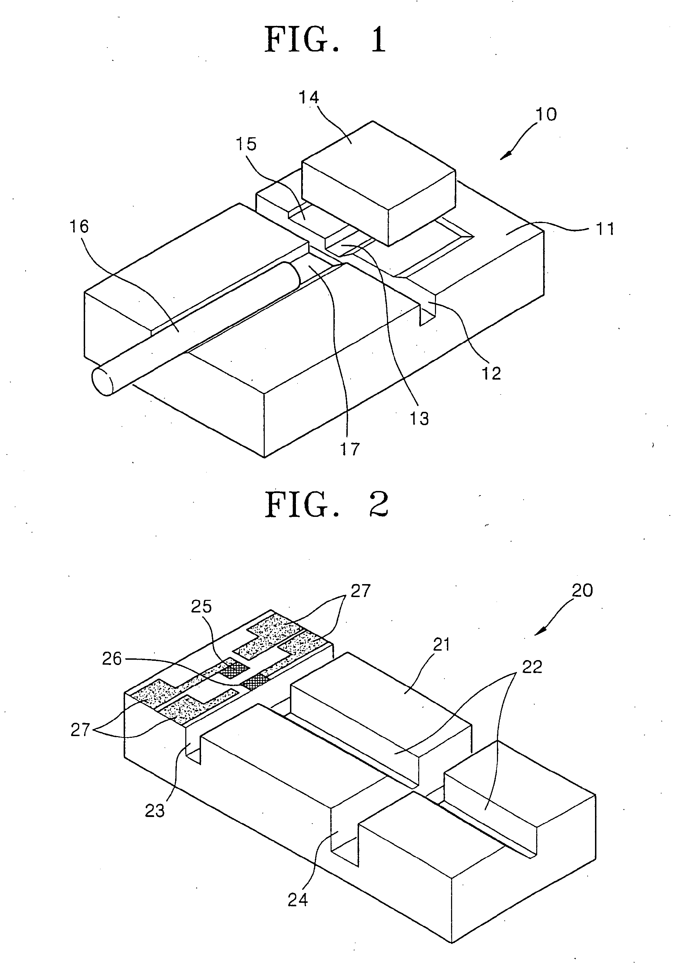

Referring to FIG. 1, an optical module 10 comprises a silicon wafer 11, a first fixing groove 17 formed in the silicon wafer 11 for allowing an optical fiber 16 to be seated therein, a mediating groove 12 arranged perpendicularly to the first fixing groove 17 and being deeper than the first fixing groove 17, a second fixing groove 15 formed to have a rectangular shape adjacent to the mediating groove 12 and being shallower than the first fixing groove 17, and a laser beam guiding slot 13 formed in the middle of the second fixing groove 15 to be arranged perpendicularly to the mediating groove 12 and in line with the first fixing groove 17, and equal in depth to the first fixing groove 17. A photo detector 14 is mounted on a gold-plated area which is formed by metal patterning on the laser beam guiding slot 13.

The optical fiber 16 is fixed to the first fixing groove 17 by an adhesive such as an epoxy, and the photo detector 14 is fixed to the second fixing groove 15. The mediating groove 12 maintains a predetermined distance between the optical fiber 16 and the photo detector 14.

In general, the reliability of an optical fiber which has been fixed is proportional to an effective fixing length. However, since the mediating groove 13 is close to the photo detector 14 in the optical module 10, the effective fixing length of the optical fiber 16 is small and the adhesive has difficulty penetrating the surface of the optical fiber 16, thereby making it difficult to ensure that the optical fiber 16 is reliable if it has been fixed.

FIG. 2 is a perspective view of a conventional optical module disclosed in Japanese Patent Publication No. 11-109188. Referring to FIG. 2, an optical module 20 has a similar structure to the optical module 10 described with reference to FIG. 1. However, the optical module 20 is different in that a first groove 23 and a second groove 24 are formed on a silicon substrate 21 perpendicularly to a V-groove 22 in which an optical fiber (not shown) is placed. The second groove 24 has a larger depth and width than the first groove 23, such that the portion of the silicon substrate 21 on which the second groove 24 is formed is thinner than the rest of the silicon substrate 21, and thus, can absorb heat and stress applied to the silicon substrate 21 and can permit an adhesive to easily penetrate an edge under the optical fiber. The optical module 20 also includes an area 25 on which a laser diode is installed, an area 26 on which a photo detector is installed, and a metal layer 27.

However, the optical module illustrated in FIG. 2 also decreases the effective fixing length of the optical fiber and increases the possibility of a crack due to an external stress, leading to low productivity of the optical module.

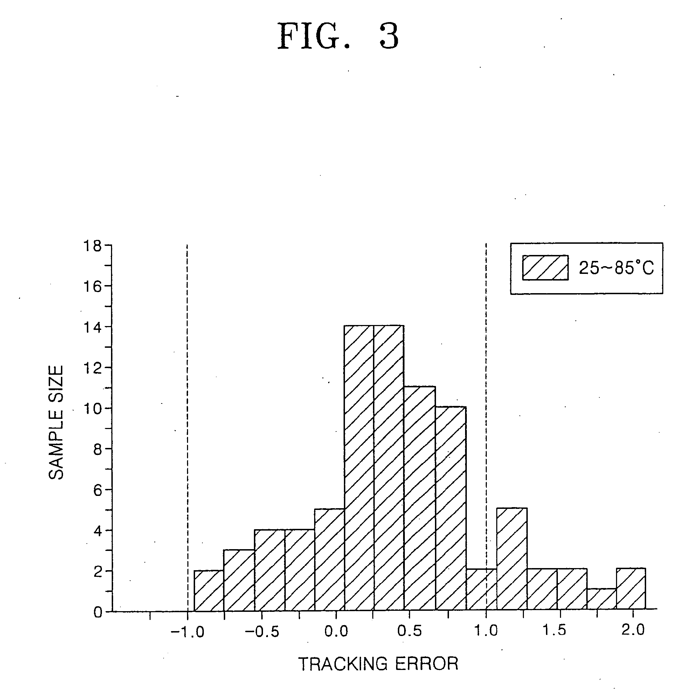

In addition to the aforesaid optical modules, there has been suggested an optical module structured such that a rectangular groove of a predetermined depth is formed at a point near the middle of a V-groove in a direction perpendicular to the V-groove in which an optical fiber is seated. FIG. 3 is a graph illustrating a relationship between temperature and tracking error when the optical module having the rectangular groove is used. It can be seen from the graph of FIG. 3 that in the temperature range of 25 to 85°C, there is a tracking error beyond an error limit of ±1.0, and accordingly, a poor optical module may be manufactured.

An optical module having an optical cap coupled with a substrate has also been developed. However, this also fails to effectively fix an optical fiber because it obstructs the flow of an adhesive to a V-groove.

According to an aspect of the present invention, there is provided an optical module comprising an optical element, an optical fiber connected to the optical element, a substrate on which the optical element and the optical fiber are mounted, and a guide groove formed adjacent to an edge of the substrate in a direction perpendicular to the fixing groove and adapted to guide an adhesive for fixing the optical fiber to the fixing groove, wherein the substrate has a fixing groove in which the optical fiber is seated.

According to another aspect of the present invention, there is provided an optical module including an optical element, an optical fiber connected to the optical element, a substrate on which the optical element and the optical fiber are mounted, an optical cap coupled with the substrate and having an insertion groove, into which the optical fiber is inserted, and a guide groove formed adjacent to an edge of the substrate in a direction perpendicular to the fixing groove and adapted to guide an adhesive for fixing the optical fiber to the fixing groove, wherein the substrate has a fixing groove in which the optical fiber is seated.

The guide groove may extend to the edges of the substrate that are parallel to the fixing groove.

A bottom surface of the guide groove may be perpendicular to side surfaces of the guide groove, or a bottom surface of the guide groove may be at an obtuse angle to side surfaces of the guide groove. In this case, the guide groove may be formed along the edge of the substrate to form a stepped portion on the substrate.

The present invention provides an optical module which can raise reliability in fixing an optical fiber and ensure good productivity.

The above and other features and advantages of the present invention will become more apparent by describing in detail exemplary embodiments thereof with reference to the attached drawings in which:
FIG. 1 is a perspective view of an optical module disclosed in U.S. Patent No. 6,300,151;
FIG. 2 is a perspective view of an optical module disclosed in Japanese Patent Publication No. 11-109188;
FIG. 3 is a graph illustrating a relationship between sample size and tracking error when a conventional optical module is used;
FIG. 4A is a perspective view of an optical module according to a first preferred embodiment of the present invention;
FIG. 4B is a perspective view of an optical module according to a second preferred embodiment of the present invention;
FIG. 5A is a perspective view of an optical module according to a third preferred embodiment of the present invention;
FIG. 5B is a perspective view of an optical module according to a fourth preferred embodiment of the present invention; and
FIG. 6 is a graph illustrating a relationship between sample size and tracking error when the optical module shown in FIG. 4A is used.

The present invention will now be described more fully with reference to the accompanying drawings, in which preferred embodiments of the invention are shown.

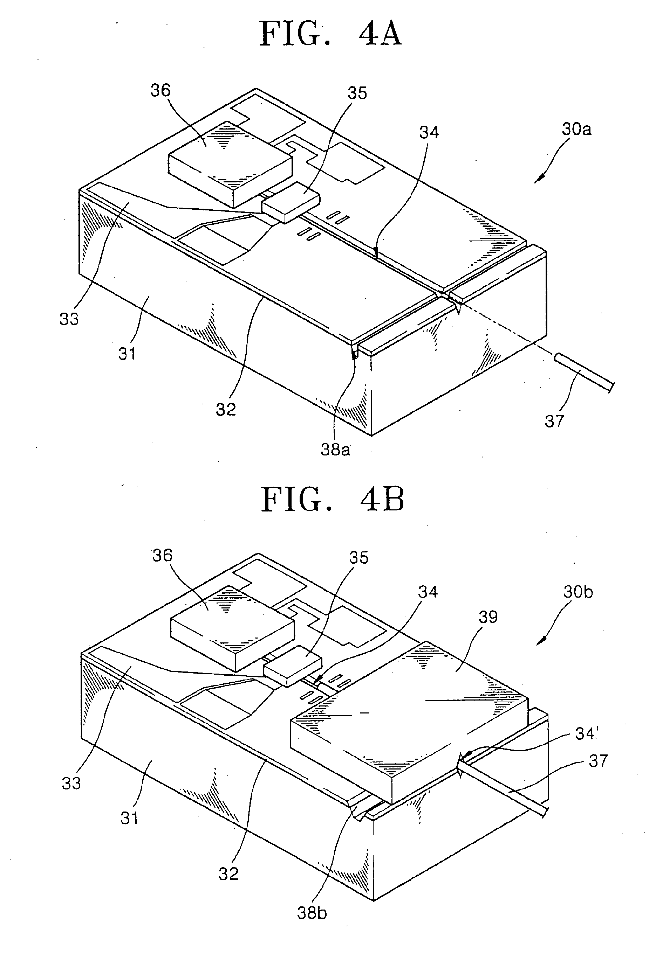

FIG. 4A is a perspective view of an optical module according to a first preferred embodiment of the present invention.

Referring to FIG. 4A, an optical module 30a includes a substrate 31, an insulating layer 32 deposited on the substrate 31, a metal layer 33 formed on the insulating layer 32 to be connected to an external power supply, a fixing groove 34 in which an optical fiber 37 is placed, a power source 35 which transmits optical signals to the optical fiber 37, and a photo detector 36 which receives the optical signals and converts them into electric signals to detect information. Here, the substrate 31 is made of silicon, and the insulating layer 32 is made of silicon dioxide.

The optical module 30a has a guide groove 38a formed perpendicularly to the fixing groove 34 near the edge where the optical fiber is placed and adapted to guide an adhesive. The guide groove 38a is adjacent to an edge of the substrate 31 and extends to both edges of the substrate 31 that are parallel to the fixing groove 34. However, the length, width, and, depth of the guide groove 38a are variable to effectively guide the adhesive to the fixing groove 34. Since the guide groove 38a extends to the edges of the substrate 31, the optical module 30a has a large effective fixing length, resulting in considerable improvement in optical fiber-fixing reliability.

The guide groove 38a may be formed in a rectangular shape having a bottom surface parallel to the top surface of the substrate 31, as shown in FIG. 4A. The guide groove 38a may also be formed to have a bottom surface formed at an obtuse angle to side surfaces, as shown in FIG. 4B. The guide groove 38a may have different shapes from the above. The guide groove 38a is typically patterned using a photo process, but may be patterned using a mechanical grinding process.

FIG. 4B is a perspective view of an optical module according to a second preferred embodiment of the present invention. An optical module 30b has an optical cap 39 in addition to the structure of the optical module 30a illustrated in FIG. 4A. The optical cap 39 is coupled with the substrate 31 to fix the optical fiber 37 more rigidly in place.

Referring to FIG. 4B, the optical cap 39 has an insertion groove 34' which is aligned with the fixing groove 34 and the optical fiber 37 is inserted into the insertion groove 34' and the fixing groove 34. When the adhesive is injected through a guide groove 38b, the adhesive travels through the fixing groove 34 and the insertion groove 34' to rigidly secure the optical fiber 37 to the fixing groove 34 and the insertion groove 34'. The guide groove 38b has a bottom surface formed at an obtuse angle to side surfaces, so that the guide groove 38b can guide the adhesive faster than the guide groove 38a having the rectangular form in FIG. 4A.

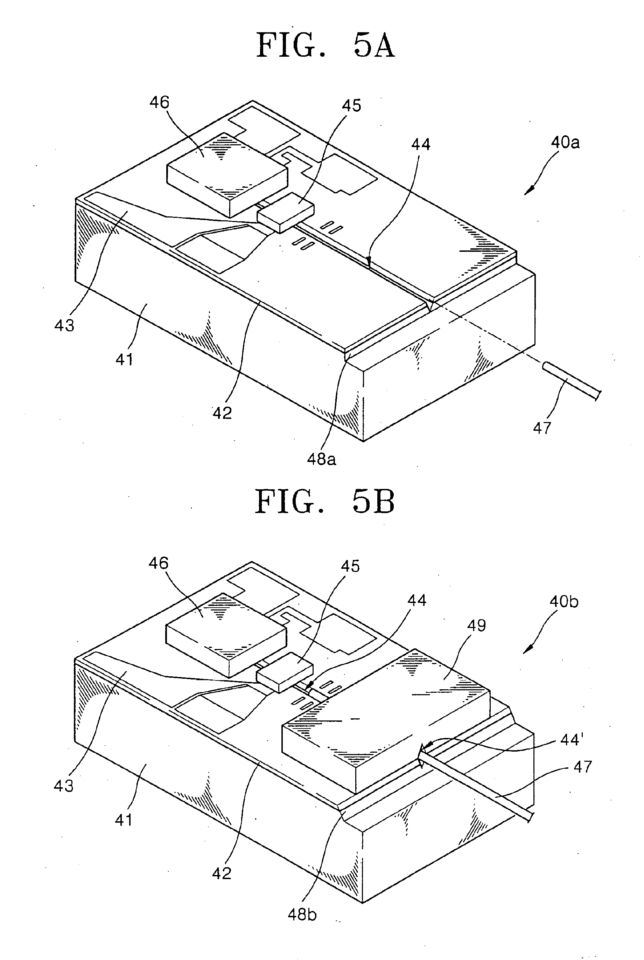

FIG. 5A is a perspective view of an optical fiber according to a third preferred embodiment of the present invention.

Referring to FIG. 5A, an optical module 40a has a similar structure to the optical module 30a shown in FIG. 4A, but is different in that a guide groove 48a is formed on an edge of a substrate 41 and thus the guide groove 48a has only one side surface. The guide groove 48a is formed perpendicularly to a fixing groove 44 and has a bottom surface which is parallel to the top surface of the substrate 41. The optical module 40a also comprises an insulating layer 42, a metal layer 43, an optical source 45, and a photo detector 46.

FIG. 5B is a perspective view of an optical module according to a fourth preferred embodiment of the present invention.

Referring to FIG. 5B, an optical module 40b includes an optical cap 49 in addition to the structure of the optical module 40a of FIG. 5A. The optical module 40b has a similar structure to the optical module 30b shown in FIG. 4B, but is different in that a guide grove 48b is formed on an edge of the substrate 41 and thus the guide groove 48b has only one side surface. The guide groove 48b is formed perpendicularly to the fixing groove 44 and has a bench shape with a bottom surface formed at an obtuse angle to side surfaces. The optical module 40b also comprises an insertion groove 44'.

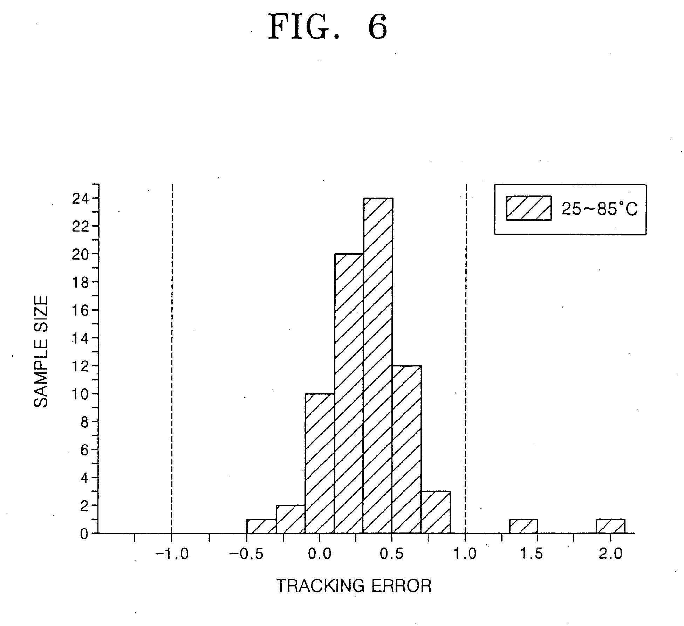

FIG. 6 is a graph illustrating a relationship between sample size and tracking error when the optical module 30a shown in FIG. 4A is used.

It can be seen from the graph of FIG. 6 that a tracking error is found within an error limit of ±1.0 irrespective of sample size. Thus, the optical module 30a according to the preferred embodiment of the present invention can exhibit a superior performance when being applied to the field of optical communication. The optical module of the present invention has the guide groove formed on the edge of the substrate under the optical fiber, and accordingly, the effective fixing length for the optical fiber can be improved 1.5 times or more, enabling the adhesive to be easily applied and penetrate into the edge. As a result, the optical module-fixing reliability is enhanced and damage to the optical fiber such as a crack is minimized to increase productivity.

As described above, the optical module can ensure a high level of reliability in fixing the optical fiber and reduce a defective proportion to increase productivity.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. An optical module comprising:
a substrate having a fixing groove, and a guide groove formed adjacent to an edge of the substrate in a direction perpendicular to the fixing groove;
an optical element mounted on the substrate; and
an optical fiber mounted on the substrate and connected to the optical element;
wherein the optical fiber is seated in the fixing groove and the guide groove is adapted to guide an adhesive for fixing the optical fiber to the fixing groove.

2. The optical module of claim 1, further comprising an optical cap coupled with the substrate and having an insertion groove, into which the optical fiber is inserted, correspondingly facing the fixing groove.

3. The optical module of claim 1 or 2, wherein the guide groove extends to the edges of the substrate that are parallel to the fixing groove.

4. The optical module of any one of the preceding claims, wherein a bottom surface of the guide groove is perpendicular to side surfaces of the guide groove.

5. The optical module of any one of claims 1 to 3,, wherein a bottom surface of the guide groove is at an obtuse angle to side surfaces of the guide groove.

6. The optical module of claim 4 or 5, wherein the guide groove is formed along the edge of the substrate to form a stepped portion on the substrate.
